(19)

**Europäisches Patentamt**
**European Patent Office**
**Office européen des brevets**

(11)  **EP 4 510 290 A1**

(12)  **EUROPEAN PATENT APPLICATION**
published in accordance with Art. 153(4) EPC

(43) Date of publication:
**19.02.2025  Bulletin 2025/08**

(21) Application number: **22963002.5**

(22) Date of filing: **25.10.2022**

(51) International Patent Classification (IPC):
**H01M 10/42** (2006.01)        **H01M 10/058** (2010.01)
**H01M 10/0525** (2010.01)

(52) Cooperative Patent Classification (CPC):
**H01M 10/0525; H01M 10/058; H01M 10/42**

(86) International application number:
**PCT/CN2022/127387**

(87) International publication number:
**WO 2024/087015 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Hong Kong (HK)**

(72) Inventors:
• **ZHANG, Tao
Ningde, Fujian 352100 (CN)**

• **HE, Jianfu
Ningde, Fujian 352100 (CN)**
• **LIU, Qian
Ningde, Fujian 352100 (CN)**
• **YE, Yonghuang
Ningde, Fujian 352100 (CN)**
• **CUI, Chen
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54)  **BATTERY CELL, BATTERY, AND ELECTRIC APPARATUS**

(57)      A battery cell (20), a battery (100), and an electrical device are disclosed. The battery cell (20) includes a housing (22) and at least 3 electrode assemblies (23). A cavity is defined in the housing (22). The cavity includes a first region (24) and a second region (25). The first region (24) is closer to the housing (22) than the second region (25). The at least 3 electrode assemblies (23) are disposed in the cavity. A capacity of a single electrode assembly (23) located in the first region (24) is $Cap_1$, a capacity of a single electrode assembly (23) located in the second region (25) is $Cap_2$, and $Cap_2$ is greater than $Cap_1$. By controlling $Cap_2$ to be greater than $Cap_1$, the electrode assembly (23) in the second region (25) contains more active lithium than the electrode assembly (23) in the first region (24). In this way, the fading rate of the electrode assembly (23) located in the second region (25) matches the fading rate of the electrode assembly (23) located in the first region (24), thereby slowing down the overall fading and increasing the service life of the battery cell (20).

FIG. 4

EP 4 510 290 A1

## Description

### TECHNICAL FIELD

This application relates to the field of battery technology, and in particular, to a battery cell, a battery, and an electrical device.

### BACKGROUND

Power batteries have been widely used in electric vehicles, mobile phones, tablet computers, and power storage fields due to significant advantages such as cost-effectiveness, environmental friendliness, a long cycle life, and good safety performance. Currently, the requirements imposed on the performance of batteries in use are higher in various fields, and the problem of capacity fading has become a main constraint factor of the power batteries.

### SUMMARY

In view of the above problem, this application provides a battery cell, a battery, and an electrical device to alleviate capacity fading of the battery.

According to a first aspect, an example of this application provides a battery cell, including: a housing and at least 3 electrode assemblies. A cavity is defined in the housing. The cavity includes a first region and a second region. The first region is closer to the housing than the second region. The at least 3 electrode assemblies are disposed in the cavity. A capacity of a single electrode assembly located in the first region is $Cap_1$, a capacity of a single electrode assembly located in the second region is $Cap_2$, and $Cap_2$ is greater than $Cap_1$.

In some technical solutions known to the inventor, because the electrode assembly in the second region is closer to the middle of the housing than the electrode assembly in the first region, the operating temperature of the electrode assembly in the second region is higher, and the side reaction at an electrode interface of the electrode assembly in the second region is intenser. Consequently, the loss of active lithium in the electrode assembly in the second region is heavier, and the capacity fading is faster. In the battery cell of this application, by controlling the capacity $Cap_2$ of the electrode assembly in the second region to be greater than the capacity $Cap_1$ of the electrode assembly in the first region, the amount of active lithium in the electrode assembly in the second region is larger than that in the electrode assembly in the first region. In this way, the fading rate of the electrode assembly located in the second region matches the fading rate of the electrode assembly located in the first region, thereby slowing down the overall fading. At the same time, an equivalent rate of the electrode assembly in the second region is lower during charge and discharge, that is, the current density is lower, and the resulting heat is lower, thereby further reducing the temperature difference between the electrode assembly in the first region and the electrode assembly in the second region, slowing down the capacity fading of the entire battery cell, and increasing the service life of the battery cell.

In some embodiments, the at least 3 electrode assemblies are stacked and arranged in the cavity, and, along a stacking direction, the capacity of the electrode assembly located at either end is $Cap_1$, and the capacity of the electrode assembly located in the middle is $Cap_2$. When at least 3 electrode assemblies are stacked in the cavity, the electrode assemblies located at two ends are closer to the housing than the electrode assembly located in the middle, and the temperature increment of the electrode assemblies located in the middle is greater than the temperature increment of the electrode assemblies located at the two ends during use, thereby resulting in a greater loss of the active lithium of the electrode assembly located in the middle. In the battery cell of this application, by controlling the capacity $Cap_2$ of the electrode assembly in the middle to be greater than the capacity $Cap_1$ of the electrode assemblies at the two ends, the amount of active lithium in the electrode assembly located in the middle is larger than that in the electrode assemblies located at the two ends. In this way, the fading rate of the electrode assembly located in the second region matches the fading rate of the electrode assembly located in the first region, thereby slowing down the overall fading. At the same time, an equivalent rate of the electrode assembly in the middle is lower during charge and discharge, that is, the current density is lower, and the resulting heat is lower, thereby further reducing the temperature difference between the electrode assembly in the middle and the electrode assemblies at the two ends, slowing down the capacity fading of the entire battery cell, and increasing the service life of the battery cell.

In some embodiments, a thickness of the single electrode assembly located in the first region along the stacking direction is $H_1$, a thickness of the single electrode assembly located in the second region along the stacking direction is $H_2$, and $Cap_1$, $Cap_2$, $H_1$, and $H_2$ satisfy the following relationship: $(Cap_1 \times H_2)/(Cap_2 \times H_1) < 1$. Because the capacity of the battery cell is positively correlated to the thickness, when $(Cap_1 \times H_2)/(Cap_2 \times H_1)$ is less than 1, it can be satisfied that the capacity $Cap_2$ of the electrode assembly in the second region is greater than the capacity $Cap_1$ of the electrode assembly in the first region. When $(Cap_1 \times H_2)/(Cap_2 \times H_1)$ is greater than or equal to 1, the capacity $Cap_2$ of the electrode assembly in the second region is less than or equal to the capacity $Cap_1$ of the electrode assembly in the first region, thereby shortening the service life of the battery cell.

In some embodiments, the cavity further includes a third region. The third region is closer to the housing than the second region, the first region is closer to the housing than the third region, and the capacity of the single electrode assembly located in the third region is $Cap_3$, satisfying: $Cap_2 \geq Cap_3 \geq Cap_1$. Because the electrode assembly in the second region is closer to the middle of the housing than the electrode assembly in the third region, the operating temperature of the electrode assembly in the second region is higher, and the operating temperature of the electrode assembly in the third region is higher than that of the electrode assembly in the first region. Consequently, the loss of active lithium of the electrode assembly in the second region is heavier than the loss of active lithium of the electrode assembly in the third region, and the loss of active lithium of the electrode assembly in the third region is heavier than the loss of active lithium of the electrode assembly in the first region. By satisfying the relational expression $Cap_2 \geq Cap_3 \geq Cap_1$, the amount of active lithium in the electrode assembly in the region with a greater temperature increment is larger, the fading rate is more matched between the electrode assemblies in different regions, thereby slowing down the overall fading and increasing the service life of the battery cell.

In some embodiments, the battery cell satisfies at least one of the following conditions a or b: a. a coating mass of a positive active material of the single electrode assembly located in the first region is less than a coating mass of a positive active material of the single electrode assembly located in the second region; or b. a gravimetric capacity of a positive active material of the single electrode assembly located in the first region is less than a gravimetric capacity of a positive active material of the single electrode assembly located in the second region. Both the coating mass of the positive active material of a single electrode assembly and the gravimetric capacity of the positive active material of a single electrode assembly affect the value of the capacity Cap of the electrode assembly.

In some embodiments, a ratio of the coating mass of the positive active material of the single electrode assembly located in the first region to the coating mass of the positive active material of the single electrode assembly located in the second region is (0.8 to 0.99): 1. The higher the coating mass of the positive active material of a single electrode assembly, the higher the capacity Cap of the electrode assembly. When the ratio of the coating mass of the positive active material of a single electrode assembly located in the first region to the coating mass of the positive active material of a single electrode assembly located in the second region is (0.8 to 0.99): 1, the capacity Cap of a single electrode assembly located in the first region is caused to be lower than the capacity Cap of a single electrode assembly located in the second region, and the difference between the capacity $Cap_1$ of a single electrode assembly in the first region of the battery cell and the capacity $Cap_2$ of a single electrode assembly in the second region is prevented from being excessive.

In some embodiments, a ratio of the coating mass of the positive active material of the single electrode assembly located in the first region to the coating mass of the positive active material of the single electrode assembly located in the second region is (0.92 to 0.95): 1. When the ratio of the coating mass of the positive active material of a single electrode assembly located in the first region to the coating mass of the positive active material of a single electrode assembly located in the second region is (0.8 to 0.99): 1, the capacity Cap of a single electrode assembly located in the first region is caused to be lower than the capacity Cap of a single electrode assembly located in the second region, and the difference between the capacity $Cap_1$ of a single electrode assembly in the first region of the battery cell and the capacity $Cap_2$ of a single electrode assembly in the second region is prevented from being excessive.

In some embodiments, a ratio of the gravimetric capacity of the positive active material of the single electrode assembly located in the first region to the gravimetric capacity of the positive active material of the single electrode assembly located in the second region is 1: (1.05 to 1.1). The higher the gravimetric capacity of the positive active material of a single electrode assembly, the higher the capacity Cap of the electrode assembly. When the ratio of the gravimetric capacity of the positive active material of a single electrode assembly located in the first region to the gravimetric capacity of the positive active material of a single electrode assembly located in the second region is 1: (1.05 to 1.1), the capacity Cap of a single electrode assembly located in the first region is caused to be lower than the capacity Cap of a single electrode assembly located in the second region, and the matching of the positive active materials between different regions needs to be ensured.

According to a second aspect, this application provides a battery, including the battery cell disclosed in the foregoing embodiment.

According to a third aspect, this application provides an electrical device. The electrical device includes the battery disclosed in the foregoing embodiment. The battery is configured to provide electrical energy.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

**BRIEF DESCRIPTION OF DRAWINGS**

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:

FIG. 1 is a schematic structural diagram of a vehicle according to some embodiments of this application;

FIG. 2 is an exploded view of a battery according to some embodiments of this application;

FIG. 3 is a schematic exploded view of a first battery cell according to some embodiments of this application;

FIG. 4 is a front perspective view of a first battery cell according to some embodiments of this application;

FIG. 5 is a schematic arrangement diagram of electrode assemblies in a first battery cell according to some embodiments of this application;

FIG. 6 is a schematic arrangement diagram of electrode assemblies in a second battery cell according to some embodiments of this application;

FIG. 7 is a schematic arrangement diagram of electrode assemblies in a third battery cell according to some embodiments of this application; and

FIG. 8 is a schematic arrangement diagram of electrode assemblies in a fourth battery cell according to some embodiments of this application.

List of reference numerals:

1000-vehicle;

100-battery; 200-controller; 300-motor;

10-box; 11-first part; 12-second part;

20-battery cell; 21-end cap; 22-housing; 23-electrode assembly; and

24-first region; 25-second region; 26-third region.

## DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The inventor hereof has noticed that, for a battery cell that includes a plurality of electrode assemblies, the capacity fading rate varies between different electrode assemblies, and the overall capacity of the battery cell is constrained by the electrode assembly with the fastest capacity fading due to the "barrel effect" of the battery cell in use.

To alleviate the capacity fading problem of the battery cell, the inventor finds through research that the battery cell generates and dissipates heat during charge and discharge. In a battery cell structure that includes a plurality of electrode assemblies, different battery cells are located in different environments. An electrode assembly far away from the housing accumulates heat due to failure to dissipate heat sufficiently in time. Consequently, the electrode assembly far away from the housing suffers from a higher operating temperature, a heavier loss of active lithium, and faster capacity fading.

In view of the above factors, in order to alleviate the technical problem of a faster capacity fading of the battery cell caused by the loss of active lithium, the inventor has designed a battery cell through in-depth research. Because the electrode assembly in the second region is closer to the middle of the housing than the electrode assembly in the first region, the operating temperature of the electrode assembly in the second region is higher, and the side reaction at an electrode interface of the electrode assembly in the second region is intenser. Consequently, the loss of active lithium in the electrode assembly in the second region is heavier, and the capacity fading is faster. In the battery cell of this application, by controlling the capacity $Cap_2$ of the electrode assembly in the second region to be greater than the capacity $Cap_1$ of the electrode assembly in the first region, the amount of active lithium in the electrode assembly in the second region is larger than that in the electrode assembly in the first region. In this way, the fading rate of the electrode assembly located in the second region matches the fading rate of the electrode assembly located in the first region, thereby slowing down the overall fading. At the same time, an equivalent rate of the electrode assembly in the second region is lower during charge and discharge, that is, the current density is lower, and the resulting heat is lower, thereby further reducing the temperature difference between the electrode assembly in the first region and the electrode assembly in the second region, slowing down the capacity fading of the entire battery cell, and increasing the service life of the battery cell.

The battery mentioned in embodiments of this application means a unitary physical module that includes a plurality of battery cells to provide a higher voltage and a higher capacity. A battery typically includes a box configured to package a plurality of battery cells. The box prevents liquid or other foreign matters from affecting the charging or discharging of the battery cells.

Each battery cell 20 is a secondary battery, and may be, but is not limited to, a lithium-ion battery, a lithium-sulfur battery, a sodium-ion battery, or a magnesium-ion battery. The battery cell 20 may be in the shape of a cylinder, flat body, cuboid, or the like. Depending on the form of packaging, battery cells are generally classed into three types: cylindrical battery cell, prismatic battery cell, and pouch-type battery cell.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the number of positive tabs is plural, and the plurality of positive tabs are stacked together; and the number of negative tabs is plural, and the plurality of negative tabs are stacked together. The separator may be made of a material such as polypropylene (polypropylene, PP) or polyethylene (polyethylene, PE). In addition, the electrode assembly may be of a jelly-roll type structure or a stacked type structure, without being limited herein.

The battery cell further includes a current collection component. The current collection component is configured to electrically connect a tab of the battery cell to an electrode terminal, so that electrical energy is transferred from the electrode assembly to the electrode terminal and then transferred out of the battery cell through the electrode terminal. A plurality of battery cells are electrically connected to each other by a busbar component, so as to implement series, parallel, or series-and-parallel connection between the battery cells.

The battery further includes a sampling terminal and a battery management system. The sampling terminal is connected to a busbar component, and is configured to acquire information on the battery cell such as voltage or temperature. The sampling terminal transmits the acquired battery cell information to the battery management system. When detecting that the battery cell information exceeds a normal range, the battery management system limits an output power of the battery to achieve safety protection.

Understandably, the electrical devices that employ the battery disclosed in an embodiment of this application may come in various forms, for example, a mobile phone, a portable device, a notebook computer, an electric power cart, an electric vehicle, a ship, a spacecraft, an electric toy, an electric tool. For example, the spacecraft includes an airplane, a rocket, a space shuttle, a spaceship, and the like. The electric toy includes a fixed or mobile electric toy, such as a game console, an electric car toy, an electric ship toy, an electric airplane toy, and the like. The electric tool includes an electric tool for metal cutting, an electric grinding tool, an electric assembly tool, an electric tool for railways, such as an electric drill, an electric grinder, an electric wrench, an electric screwdriver, an electric hammer, an electric impact drill, a concrete vibrator, or an electric planer.

The battery cell and the battery described in an embodiment of this application are not only applicable to the electrical devices described above, but also applicable to all electrical devices that use a battery cell or a battery. For brevity, however, the following embodiments are described by using an electric vehicle as an example.

Referring to FIG. 1, FIG. 1 is a schematic structural diagram of a vehicle according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

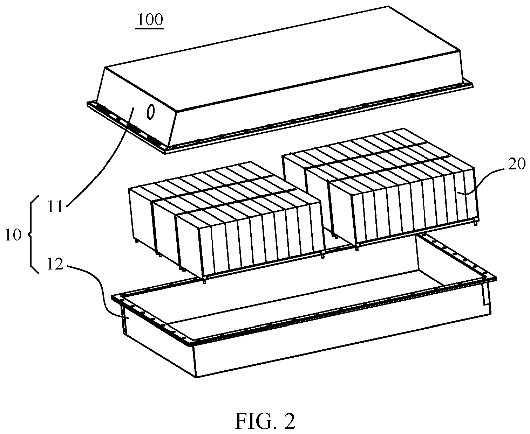

Referring to FIG. 2, FIG. 2 is an exploded view of a battery according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits on an opening side of the second part 12 so that the first part 11 and the second part 12 together define the accommodation space. Alternatively, both the first part 11 and the second part 12 may be hollow structures opened at one side. The opening side of the first part 11 fits the opening side of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery 100 in the form of battery modules first. A plurality of battery modules are then connected in series, parallel, or series-and-parallel pattern to form a whole for being accommodated in the box 10. The battery 100 may further include other structures. For example, the battery 100 may further include a busbar component. The busbar component is configured to implement electrical connection between the plurality of battery cells 20.

Each battery cell 20 is a secondary battery, and may be, but is not limited to, a lithium-ion battery, a lithium-sulfur battery, a sodium-ion battery, or a magnesium-ion battery. The battery cell 20 may be in the shape of a cylinder, flat body, cuboid, or the like.

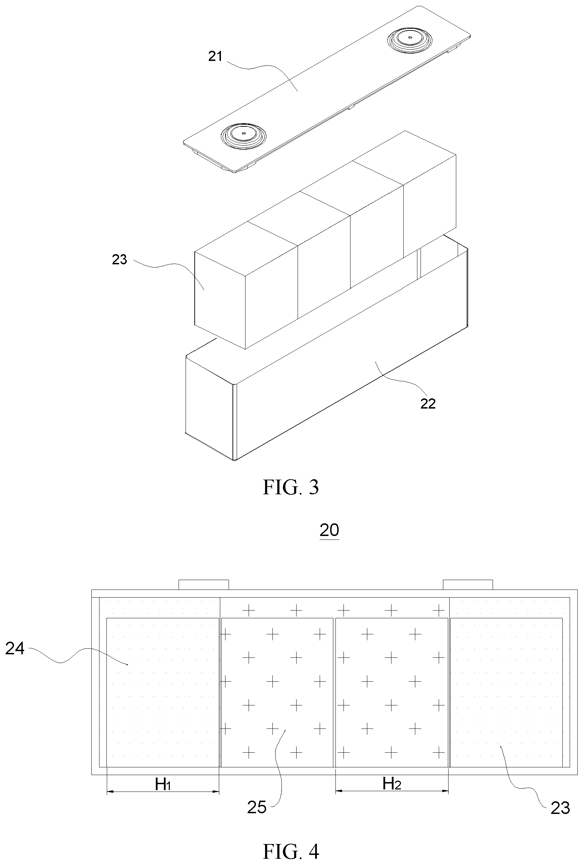

Referring to FIG. 3, FIG. 3 is a schematic exploded view of a first battery cell according to some embodiments of this application. The battery cell 20 is a minimum unit for making up a battery. As shown in FIG. 3, the battery cell 20 includes an end cap 21, a housing 22, an electrode assembly 23, and other functional components.

The end cap 21 is a component that fits and covers the opening of the housing 22 to isolate the internal environment of the battery cell 20 from the external environment. Without limitation, the shape of the end cap 21 may be adapted to the shape of the housing 22 to fit the housing 22. Optionally, the end cap 21 may be made of a material of appropriate hardness and strength (such as aluminum alloy), so that the end cap 21 is not prone to deform when squeezed or impacted. In this way, the battery cell 20 achieves higher structural strength and higher safety performance. Functional components such as electrode terminals may be disposed on the end cap 21. The electrode terminals may be configured to be electrically connected to the electrode assembly 23 to output or input electrical energy of the battery cell 20. In some embodiments, a pressure relief mechanism configured to release an internal pressure when the internal pressure or temperature of the battery cell 20 reaches a threshold may be further disposed on the end cap 21. The end cap 21 may also be made of a variety of materials such as copper, iron, aluminum, stainless steel, aluminum alloy, or plastic, without being particularly limited herein. In some embodiments, an insulation piece may be further disposed on an inner side of the end cap 21. The insulation piece may be configured to isolate an electrically connected component in the housing 22 from the end cap 21 to reduce short-circuit risks. For example, the insulator may be plastic, rubber, or the like.

The housing 22 is a component configured to fit the end cap 21 to form an internal environment of the battery cell 20. The formed internal environment may be used to accommodate the electrode assembly 23, an electrolytic solution, and other components. The housing 22 and the end cap 21 may be stand-alone components. An opening may be made on the housing 22. At the opening, the end cap 21 fits with the opening to form the internal environment of the battery cell 20. Without limitation, the end cap 21 and the housing 22 may be integrated instead. Specifically, the end cap 21 and the housing 22 may form a common connection interface before other components are put into the housing. Subsequently, when the interior of the housing 22 needs to be sealed, the end cap 21 is made to fit with the housing 22. The housing 22 may be in various shapes and sizes, such as a cuboid, cylinder, or hexagonal prism. Specifically, the shape of the housing 22 may depend on the specific shape and size of the electrode assembly 23. The housing 22 may be made of a variety of materials such as copper, iron, aluminum, stainless steel, aluminum alloy, or plastic, without being particularly limited herein.

The electrode assembly 23 is a component that reacts electrochemically in the battery cell 20. The housing 22 may contain one or more electrode assemblies 23. The electrode assembly 23 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab. The positive tab and the negative tab may be located at one end of the body portion together or at two ends of the body portion respectively. In a charge-and-discharge process of the battery, the positive active material and the negative active material react with an electrolytic solution. The tabs are connected to electrode terminals to form a current circuit.

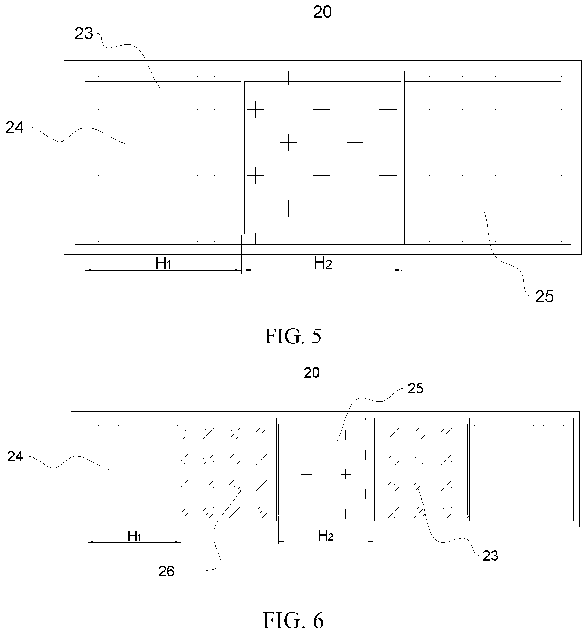

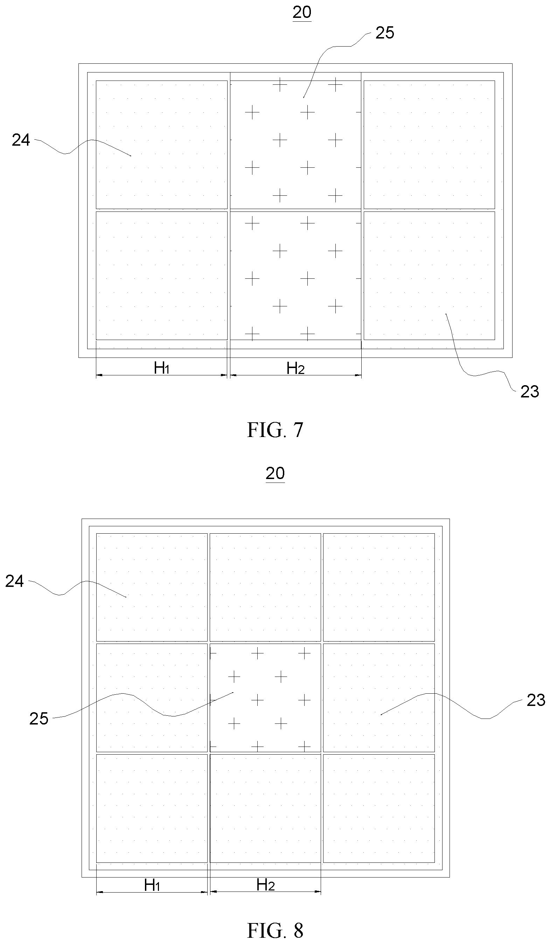

According to some embodiments of this application, referring to FIG. 3 to FIG. 8, FIG. 4 is a front perspective view of a first battery cell according to some embodiments of this application; FIG. 5 is a schematic arrangement diagram of electrode assemblies in a first battery cell according to some embodiments of this application; FIG. 6 is a schematic arrangement diagram of electrode assemblies in a second battery cell according to some embodiments of this application; FIG. 7 is a schematic arrangement diagram of electrode assemblies in a third battery cell according to some embodiments of this application; and FIG. 8 is a schematic arrangement diagram of electrode assemblies in a fourth battery cell according to some embodiments of this application.

This application provides a battery cell 20, including: a housing 22 and at least 3 electrode assemblies 23. A cavity is defined in the housing 22. The cavity includes a first region 24 and a second region 25. The first region 24 is closer to the housing 22 than the second region 25. The at least 3 electrode assemblies 23 are disposed in the cavity. A capacity of a single electrode assembly 23 located in the first region 24 is $Cap_1$, a capacity of a single electrode assembly 23 located in the second region 25 is $Cap_2$, and $Cap_2$ is greater than $Cap_1$.

The first region 24 is a region closer to the housing 22 than the second region 25. One or more electrode assemblies 23 may be contained in the first region 24.

The second region 25 is a region farther away from the housing 22 than the first region 24. One or more electrode assemblies 23 may be contained in the second region 25.

It is hereby noted that the first region 24 is termed relative to the second region 25. The cavity may be divided into a first cavity and a second cavity. The cavity may include other regions in addition to the first cavity and the second cavity.

For example, referring to FIG. 3 to FIG. 5, the battery cell 20 includes four electrode assemblies 23. The four electrode assemblies 23 are stacked in a row along a stacking direction. The region containing two electrode assemblies 23 at the two ends is the first region 24, and the region containing the two electrode assemblies 23 in the middle is the second region 25. In other words, in this structure, the cavity is divided into a first cavity and a second cavity.

Referring to FIG. 6, the battery cell 20 includes five electrode assemblies 23. The five electrode assemblies 23 are stacked in a row along the stacking direction. The region containing two electrode assemblies 23 at the two ends is the first region 24, and the region containing one electrode assembly 23 in the middle is the second region 25. In other words, in this structure, the cavity further includes other regions in addition to the first cavity and the second cavity.

In addition, the second region 25 being farther away from the housing 22 than the first region 24 does not mean that the second region 25 is not in direct contact with the housing 22.

For example, referring to FIG. 3 to FIG. 5, each electrode assembly 23 located in the second region 25 includes two lateral faces abutting on or close to the housing 22. Each electrode assembly 23 located in the first region 24 includes three lateral faces abutting on or close to the housing 22. Therefore, understandably, the area of the face, abutting on or close to the housing 22, of a single electrode assembly 23 located in the first region 24 is greater than the area of the face, abutting on or close to the housing 22, of a single electrode assembly 23 located in the second region 25. It may be deemed that the second region 25 is farther away from the housing 22 than the first region 24.

Referring to FIG. 7, the battery cell 20 includes six electrode assemblies 23. The six electrode assemblies 23 are stacked in two rows along the stacking direction. The region containing four electrode assemblies 23 at the two ends is the first region 24, and the region containing the two electrode assemblies 23 in the middle is the second region 25. Each electrode assembly 23 located in the second region 25 includes one lateral face abutting on or close to the housing 22. Each electrode assembly 23 located in the first region 24 includes three lateral faces abutting on or close to the housing 22. Therefore, understandably, the area of the face, abutting on or close to the housing 22, of a single electrode assembly 23 located in the first region 24 is greater than the area of the face, abutting on or close to the housing 22, of a single electrode assembly 23 located in the second region 25, which also means that the second region 25 is farther away from the housing 22 than the first region 24.

Referring to FIG. 8, the battery cell 20 includes nine electrode assemblies 23. The nine electrode assemblies 23 are stacked in three rows along the stacking direction. The region containing the one electrode assembly 23 in the middle is the second region 25, and the region containing the remaining eight electrode assemblies 23 around the middle electrode assembly 23 is the first region 24. Each electrode assembly 23 located in the second region 25 is far away from the housing 22. Each electrode assembly 23 located in the first region 24 includes a lateral face abutting on or close to the housing 22. It may be deemed that the second region 25 is farther away from the housing 22 than the first region 24.

The number of at least one of the positive electrode plate or the negative electrode plate in the electrode assembly 23 is one. To be specific, the electrode assembly 23 may include one positive electrode plate and one negative electrode plate, or may include one positive electrode plate and a plurality of negative electrode plates, or may include one negative electrode plate and a plurality of positive electrode plates.

Optionally, the cavity is divided into a plurality of temperature increment regions. Different temperature increment regions incur different temperature increments. The first region 24 is a region with the lowest temperature increment, and the second region 25 is a region with the highest temperature increment.

The capacity of the electrode assembly 23 is tested by a test method well known in the art. As an example, the capacity may be tested by the following method. The test instrument may be a LAND tester, and the specific test steps are as follows: soaking a positive electrode plate obtained by disassembling a fully discharged battery in DMC for 30 minutes, and then treating the electrode plate on a single side (using NMP or another solvent to wipe off the active material on one side of the electrode plate and drying the electrode plate), and cutting the single-side-treated electrode plate by using a die-cutting machine manufactured by Initial Energy Science & Technology Co. Ltd., so as to obtain die-cut electrode plate (diameter D = 14 mm); assembling a button battery in a glovebox by using the die-cut electrode plate, where the assembling sequence may be from a negative electrode shell to a lithium sheet, one drop of electrolyte solution, a separator, one drop of electrolyte solution, a die-cut positive electrode plate, a gasket, and a elastomer; performing 0.1 mA/0.1 mA constant-current charge and discharge on the assembled button battery to determine the capacity per unit area $(CAP\_s)$; and calculating the total capacity of the electrode assembly 23 as: $CAP = (8H \times L/\Pi D^2) \times CPA\_S$.

Because the electrode assembly 23 in the second region 25 is closer to the middle of the housing 22 than the electrode assembly 23 in the first region 24, the operating temperature of the electrode assembly 23 in the second region 25 is higher, and the side reaction at an electrode interface of the electrode assembly in the second region is intenser. Consequently, the loss of active lithium in the electrode assembly 23 in the second region 25 is heavier, and the capacity fading is faster. In the battery cell 20 of this application, by controlling the capacity $Cap_2$ of the electrode assembly 23 in the second region 25 to be greater than the capacity $Cap_1$ of the electrode assembly 23 in the first region 24, the amount of active lithium in the electrode assembly 23 in the second region 25 is larger than that in the electrode assembly 23 in the first region 24. In this way, the fading rate of the electrode assembly 23 located in the second region 25 matches the fading rate of the electrode assembly 23 located in the first region 24, thereby slowing down the overall fading. At the same time, an equivalent rate of the electrode assembly 23 in the second region 25 is lower during charge and discharge, that is, the current density is lower, and the resulting heat is lower, thereby further reducing the temperature difference between the electrode assembly 23 in the first region 24 and the electrode assembly 23 in the second region 25, slowing down the capacity fading of the entire battery cell 20, and increasing the service life of the battery cell 20.

According to some embodiments of this application, optionally, still referring to FIG. 3 to FIG. 6, the at least 3 electrode assemblies 23 are stacked and arranged in the cavity. Along a stacking direction, the capacity of the electrode assembly 23 located at either end is $Cap_1$, and the capacity of the electrode assembly 23 located in the middle is $Cap_2$.

When at least 3 electrode assemblies 23 are stacked in the cavity, the electrode assemblies 23 located at two ends are closer to the housing 22 than the electrode assembly 23 located in the middle, and the temperature increment of the electrode assemblies 23 located in the middle is greater than the temperature increment of the electrode assemblies 23 located at the two ends during use, thereby resulting in a greater loss of the active lithium of the electrode assembly 23 located in the middle. In the battery cell 20 of this application, by controlling the capacity $Cap_2$ of the electrode assembly 23 in the middle to be greater than the capacity $Cap_1$ of the electrode assemblies 23 at the two ends, the amount of active lithium in the electrode assembly 23 located in the middle is larger than that in the electrode assemblies 23 located at the two ends. In this way, the fading rate of the electrode assembly 23 located in the second region 25 matches the fading rate of the electrode assembly 23 located in the first region 24, thereby slowing down the overall fading. At the same time, an equivalent rate of the electrode assembly 23 in the middle is lower during charge and discharge, that is, the current density is lower, and the resulting heat is lower, thereby further reducing the temperature difference between the electrode assembly 23 in the middle and the electrode assemblies 23 at the two ends, slowing down the capacity fading of the entire battery cell 20, and increasing the service life of the battery cell 20.

According to some embodiments of this application, optionally, referring to FIG. 4, a thickness of the single electrode assembly 23 located in the first region 24 along the stacking direction is $H_1$, a thickness of the single electrode assembly 23 located in the second region 25 along the stacking direction is $H_2$, and $Cap_1$, $Cap_2$, $H_1$, and $H_2$ satisfy the following relationship: $(Cap_1 \times H_2)/(Cap_2 \times H_1) < 1$.

The stacking direction is the arrangement direction of the electrode assemblies 23.

Optionally, $0.8 \leq (Cap_1 \times H_2)/(Cap_2 \times H_1) < 1$.

Because the capacity of the battery cell 20 is positively correlated to the thickness, when $(Cap_1 \times H_2)/(Cap_2 \times H_1)$ is less than 1, it can be satisfied that the capacity $Cap_2$ of the electrode assembly 23 in the second region 25 is greater than the capacity $Cap_1$ of the electrode assembly 23 in the first region 24. When $(Cap_1 \times H_2)/(Cap_2 \times H_1)$ is greater than or equal to 1, the capacity $Cap_2$ of the electrode assembly 23 in the second region 25 is less than or equal to the capacity $Cap_1$ of the electrode assembly 23 in the first region 24, thereby shortening the service life of the battery cell 20. When $(Cap_1 \times H_2)/(Cap_2 \times H_1)$ is less than 0.8, the service life of the battery cell 20 is also shortened.

According to some embodiments of this application, optionally, referring to FIG. 6, the cavity further includes a third region 26. The third region 26 is closer to the housing 22 than the second region 25, the first region 24 is closer to the housing 22 than the third region 26, and the capacity of the single electrode assembly 23 located in the third region 26 is $Cap_3$, satisfying: $Cap_2 \geq Cap_3 \geq Cap_1$.

The third region 26 is a region farther away from the housing 22 than the first region 24 and a region closer to the housing 22 than the second region 25. One or more electrode assemblies 23 may be contained in the third region 26.

It is hereby noted that, when $Cap_2$ is equal to $Cap_3$ under the condition of $Cap_2 \geq Cap_3$, $Cap_3$ is greater than $Cap_1$; when $Cap_3$ is equal to $Cap_1$ under the condition of $Cap_3 \geq Cap_1$, $Cap_2$ is greater than $Cap_3$. In other words, the two equal signs in $Cap_2 \geq Cap_3 \geq Cap_1$ are not satisfied at the same time.

Optionally, $Cap_2 > Cap_3 > Cap_1$.

Because the electrode assembly 23 in the second region 25 is closer to the middle of the housing 22 than the electrode assembly 23 in the third region 26, the operating temperature of the electrode assembly 23 in the second region 25 is higher, and the operating temperature of the electrode assembly 23 in the third region 26 is higher than that of the electrode assembly 23 in the first region 24. Consequently, the loss of active lithium of the electrode assembly 23 in the second region 25 is heavier than the loss of active lithium of the electrode assembly 23 in the third region 26, and the loss of active lithium of the electrode assembly 23 in the third region 26 is heavier than the loss of active lithium of the electrode assembly 23 in the first region 24. By satisfying the relational expression $Cap_2 \geq Cap_3 \geq Cap_1$, the amount of active lithium in the electrode assembly 23 in the region with a greater temperature increment is larger, the fading rate is more matched between the electrode assemblies 23 in different regions, thereby slowing down the overall fading and increasing the service life of the battery cell 20.

According to some embodiments of this application, optionally, the battery cell 20 satisfies at least one of the following conditions a or b: a. a coating mass of a positive active material of the single electrode assembly 23 located in the first region 24 is less than a coating mass of a positive active material of the single electrode assembly 23 located in the second region 25; or b. a gravimetric capacity of a positive active material of the single electrode assembly 23 located in the first region 24 is less than a gravimetric capacity of a positive active material of the single electrode assembly 23 located in the second region 25.

Both the coating mass of the positive active material of a single electrode assembly 23 and the gravimetric capacity of the positive active material of a single electrode assembly 23 affect the value of the capacity Cap of the electrode assembly 23.

According to some embodiments of this application, optionally, a ratio of the coating mass of the positive active material of the single electrode assembly 23 located in the first region 24 to the coating mass of the positive active material of the single electrode assembly 23 located in the second region 25 is (0.8 to 0.99): 1.

As an example, the ratio of the coating mass of the positive active material of the single electrode assembly 23 located in the first region 24 to the coating mass of the positive active material of the single electrode assembly 23 located in the second region 25 may be 0.8: 1, 0.82: 1, 0.85: 1, 0.88: 1, 0.9: 1, 0.92: 1, 0.95: 1, or 0.99: 1.

The higher the coating mass of the positive active material of a single electrode assembly 23, the higher the capacity Cap of the electrode assembly 23. When the ratio of the coating mass of the positive active material of a single electrode assembly 23 located in the first region 24 to the coating mass of the positive active material of a single electrode assembly 23 located in the second region 25 is (0.8 to 0.99): 1, the capacity Cap of a single electrode assembly 23 located in the first region 24 is caused to be lower than the capacity Cap of a single electrode assembly 23 located in the second region 25, and the difference between the capacity $Cap_1$ of a single electrode assembly 23 in the first region 24 of the battery cell 20 and the capacity $Cap_2$ of a single electrode assembly 23 in the second region 25 is prevented from being excessive.

Optionally, the coating mass of the positive active material layer of the electrode assembly 23 is 0.1 g/1540.25 $mm^2$ to 0.6 g/1540.25 $mm^2$.

As an example, the coating mass of the positive active material layer of the electrode assembly 23 may be 0.1 g/1540.25 $mm^2$, 0.2 g/1540.25 $mm^2$, 0.3 g/1540.25 $mm^2$, 0.4 g/1540.25 $mm^2$, 0.5 g/1540.25 $mm^2$, or 0.6 g/ 1540.25 $mm^2$.

Optionally, the coating mass of the positive active material layer of the electrode assembly 23 is 0.2 g/1540.25 $mm^2$ to 0.45 g/1540.25 $mm^2$.

Optionally, the compaction density of the positive electrode plate is 1.8 g/cc to 3.9 g/cc.

As an example, the compaction density of the positive electrode plate may be 1.8 g/cc, 1.9 g/cc, 2 g/cc, 2.1 g/cc, 2.2 g/cc, 2.3 g/cc, 2.4 g/cc, 2.5 g/cc, 2.6 g/cc, 2.7 g/cc, 2.8 g/cc, 2.9 g/cc, 3 g/cc, 3.1 g/cc, 3.2 g/cc, 3.3 g/cc, 3.4 g/cc, 3.5 g/cc, 3.6 g/cc, 3.7 g/cc, 3.8 g/cc, or 3.9 g/cc.

Optionally, the compaction density of the positive electrode plate is 2.1 g/cc to 3.6 g/cc.

Optionally, the positive active material includes any one or more of nickel-cobalt-manganese (NCM), nickel-cobalt-aluminum (NCA), lithium iron phosphate, lithium manganese iron phosphate, lithium manganese oxide, lithium cobalt oxide, lithium nickel oxide, or a sodium ion compound.

Optionally, the coating mass of the negative active material layer of the electrode assembly 23 is 0.05 g/1540.25 $mm^2$ to 0.4 g/1540.25 $mm^2$.

As an example, the coating mass of the negative active material layer of the electrode assembly 23 may be 0.05 g/1540.25 $mm^2$, 0.1 g/1540.25 $mm^2$, 0.2 g/1540.25 $mm^2$, 0.3 g/1540.25 $mm^2$, or 0.4 g/1540.25 $mm^2$.

Optionally, the coating mass of the negative active material layer of the electrode assembly 23 is 0.12 g/1540.25 $mm^2$ to 0.2 g/1540.25 $mm^2$.

Optionally, the compaction density of the negative electrode plate is 0.5 g/cc to 2.2 g/cc.

As an example, the compaction density of the negative electrode plate may be 0.5 g/cc, 0.6 g/cc, 0.7 g/cc, 0.8 g/cc, 0.9 g/cc, 1 g/cc, 1.1 g/cc, 1.2 g/cc, 1.3 g/cc, 1.4 g/cc, 1.5 g/cc, 1.6 g/cc, 1.7 g/cc, 1.8 g/cc, 1.9 g/cc, 2 g/cc, 2.1 g/cc, or 2.2 g/cc.

Optionally, the compaction density of the negative electrode plate is 2.1 g/cc to 3.6 g/cc.

Optionally, the negative active material includes any one or more of artificial graphite, natural graphite, soft carbon, hard carbon, graphene, carbon nanotubes, or lithium titanium oxide.

According to some embodiments of this application, optionally, a ratio of the coating mass of the positive active material of the single electrode assembly 23 located in the first region 24 to the coating mass of the positive active material of the single electrode assembly 23 located in the second region 25 is (0.92 to 0.95): 1.

When the ratio of the coating mass of the positive active material of a single electrode assembly 23 located in the first region 24 to the coating mass of the positive active material of a single electrode assembly 23 located in the second region 25 is (0.8 to 0.99): 1, the capacity Cap of a single electrode assembly 23 located in the first region 24 is caused to be lower than the capacity Cap of a single electrode assembly 23 located in the second region 25, and the difference between the capacity $Cap_1$ of a single electrode assembly 23 in the first region 24 of the battery cell 20 and the capacity $Cap_2$ of a single electrode assembly 23 in the second region 25 is prevented from being excessive.

According to some embodiments of this application, optionally, a ratio of the gravimetric capacity of the positive active material of the single electrode assembly 23 located in the first region 24 to the gravimetric capacity of the positive active material of the single electrode assembly 23 located in the second region 25 is 1: (1.05 to 1.1).

As an example, the ratio of the gravimetric capacity of the positive active material of the single electrode assembly 23 located in the first region 24 to the gravimetric capacity of the positive active material of the single electrode assembly 23 located in the second region 25 may be 1: 1.05, 1: 1.06, 1: 1.07, 1: 1.08, 1: 1.09, or 1: 1.1.

The higher the gravimetric capacity of the positive active material of a single electrode assembly 23, the higher the capacity Cap of the electrode assembly 23. When the ratio of the gravimetric capacity of the positive active material of a single electrode assembly 23 located in the first region 24 to the gravimetric capacity of the positive active material of a single electrode assembly 23 located in the second region 25 is 1: (1.05 to 1.1), the capacity Cap of a single electrode assembly 23 located in the first region 24 is caused to be lower than the capacity Cap of a single electrode assembly 23 located in the second region 25, and the matching of the positive active materials between different regions needs to be ensured.

The following describes the battery cell 20 in this application in more detail with reference to some embodiments.

The battery cells 20 in Embodiments 1 to 10 and Comparative Embodiment 1 are shown in FIG. 3 to FIG. 5. The battery cell 20 includes four electrode assemblies 23. The four electrode assemblies 23 are stacked in one row along the stacking direction. The region containing two electrode assemblies 23 at the two ends is the first region 24, and the region containing the two electrode assemblies 23 in the middle is the second region 25.

The battery cells 20 in Embodiments 11 to 13 and Comparative Embodiment 2 are shown in FIG. 6. The battery cell 20 includes five electrode assemblies 23. The five electrode assemblies 23 are stacked in one row along the stacking direction. The region containing two electrode assemblies 23 at the two ends is the first region 24, the region containing the two electrode assemblies 23 in the middle is the second region 25, and the region containing the second and fourth electrode assemblies 23 along the stacking direction is the third region 26.

The materials and parameters of the electrode assemblies 23 located in the first region 24 in Embodiments 1 to 13 and Comparative Embodiments 1 to 2 are shown in Table 1. The materials and parameters of the electrode assemblies 23 located in the second region 25 in Embodiments 1 to 13 and Comparative Embodiments 1 to 2 are shown in Table 2. The materials and parameters of the electrode assemblies 23 located in the third region 26 in Embodiments 10 to 13 and Comparative Embodiment 2 are shown in Table 3.

**Table 1 Electrode assemblies 23 located in the first region 24 in Embodiments 1 to 13 and Comparative Embodiments 1 to 2**

| Item | Capacity (Ah) | Thickness (mm) | Coating mass of positive active material layer | Compaction density of positive electrode plate | Coating mass of negative active material layer | Compaction density of negative electrode plate | Positive active material | Negative active material |
|---|---|---|---|---|---|---|---|---|
| Embodiment 1 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 2 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 3 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 4 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 5 | 30 | 14.5 | 0.3 g/1540.25 mm$^2$ | 2.48 g/cc | 0.15 g/1540.25 mm$^2$ | 1.45 g/cc | NCM523 | Artificial graphite |
| Embodiment 6 | 30 | 14.7 | 0.3 g/1540.25 mm$^2$ | 2.45 g/cc | 0.15 g/1540.25 mm$^2$ | 1.43 g/cc | NCM523 | Artificial graphite |
| Embodiment 7 | 30 | 15.5 | 0.3 g/1540.25 mm$^2$ | 2.33 g/cc | 0.15 g/1540.25 mm$^2$ | 1.36 g/cc | NCM523 | Artificial graphite |
| Embodiment 8 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 9 | 30 | 15 | 0.3 g/1540.25 mm$^2$ | 2.4 g/cc | 0.15 g/1540.25 mm$^2$ | 1.4 g/cc | NCM523 | Artificial graphite |

(continued)

| Item | Capacity (Ah) | Thickness (mm) | Coating mass of positive active material layer | Compaction density of positive electrode plate | Coating mass of negative active material layer | Compaction density of negative electrode plate | Positive active material | Negative active material |
|---|---|---|---|---|---|---|---|---|
| Embodiment 10 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 11 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 12 | 30 | 15 | 0.3 g/1540.25 mm$^2$ | 2.4 g/cc | 0.15 g/1540.25 mm$^2$ | 1.4 g/cc | NCM523 | Artificial graphite |
| Embodiment 13 | 30 | 15 | 0.3 g/1540.25 mm$^2$ | 2.4 g/cc | 0.15 g/1540.25 mm$^2$ | 1.4 g/cc | NCM523 | Artificial graphite |
| Comparative Embodiment 1 | 30 | 15 | 0.3 g/1540.25 mm$^2$ | 2.4 g/cc | 0.15 g/1540.25 mm$^2$ | 1.4 g/cc | NCM523 | Artificial graphite |
| Comparative Embodiment 2 | 30 | 15 | 0.3 g/1540.25 mm$^2$ | 2.4 g/cc | 0.15 g/1540.25 mm$^2$ | 1.4 g/cc | NCM523 | Artificial graphite |

**Table 2 Electrode assemblies 23 located in the second region 25 in Embodiments 1 to 13 and Comparative Embodiments 1 to 2**

| Item | Capacity (Ah) | **Thickness (mm)** | Coating mass of positive active material layer | Compaction density of positive electrode plate | Coating mass of negative active material layer | Compaction density of negative electrode plate | Positive active material | Negative active material |
|---|---|---|---|---|---|---|---|---|
| Embodiment 1 | 32.61 | 15 | 0.326 g/1540.25 mm$^2$ | 2.61 g/cc | 0.163 g/1540.25 mm$^2$ | 1.52 g/cc | NCM 523 | Artificial graphite |
| Embodiment 2 | 37.50 | 15 | 0.375 g/1540.25 mm$^2$ | 3.00 g/cc | 0.1875 g/1540.25 mm$^2$ | 1.75 g/cc | NCM 523 | Artificial graphite |
| Embodiment 3 | 31.58 | 15 | 0.316 g/1540.25 mm$^2$ | 2.53 g/cc | 0.158 g/1540.25 mm$^2$ | 1.47 g/cc | NCM 523 | Artificial graphite |
| Embodiment 4 | 30.30 | 15 | 0.303 g/1540.25 mm$^2$ | 2.42 g/cc | 0.152 g/1540.25 mm$^2$ | 1.41 g/cc | NCM 523 | Artificial graphite |

(continued)

| Item | Capa city (Ah) | **Thickn ess (mm)** | Coating mass of positive active material layer | Compacti on density of positive electrode plate | Coating mass of negative active material layer | Compacti on density of negative electrode plate | Positiv e active material | Negative active material |
|---|---|---|---|---|---|---|---|---|
| Embo diment 5 | 32.6 1 | 15.5 | 0.326 g/1540.2 5 mm$^2$ | 2.53 g/cc | 0.15 g/1540.2 5 mm$^2$ | 1.48 g/cc | NCM 523 | Artificial graphite |
| Embo diment 6 | 31.5 8 | 15.3 | 0.316 g/1540.2 5 mm$^2$ | 2.48 g/cc | 0.15 g/1540.2 5 mm$^2$ | 1.44 g/cc | NCM 523 | Artificial graphite |
| Embo diment 7 | 37.5 0 | 14.5 | 0.375 g/1540.2 5 mm$^2$ | 2.91 g/cc | 0.15 g/1540.2 5 mm$^2$ | 1.70 g/cc | NCM 523 | Artificial graphite |
| Embo diment 8 | 31.5 0 | 15 | 0.3 g/1540.2 5 mm$^2$ | 2.40 g/cc | 0.156 g/1540.2 5 mm$^2$ | 1.46 g/cc | NCM 622 | Artificial graphite |
| Embo diment 9 | 33.0 0 | 15 | 0.3 g/1540.2 5 mm$^2$ | 2.40 g/cc | 0.162 g/1540.2 5 mm$^2$ | 1.51 g/cc | NCM 712 | Artificial graphite |
| Embo diment 10 | 34.2 4 | 15 | 0.326 g/1540.2 5 mm$^2$ | 2.61 g/cc | 0.169 g/1540.2 5 mm$^2$ | 1.58 g/cc | NCM 622 | Artificial graphite |
| Embo diment 11 | 32.6 1 | 15 | 0.326 g/1540.2 5 mm$^2$ | 2.61 g/cc | 0.163 g/1540.2 5 mm$^2$ | 1.52 g/cc | NCM 523 | Artificial graphite |
| Embo diment 12 | 32.6 1 | 15 | 0.326 g/1540.2 5 mm$^2$ | 2.61 g/cc | 0.163 g/1540.2 5 mm$^2$ | 1.52 g/cc | NCM 523 | Artificial graphite |
| Embo diment 13 | 32.6 1 | 15 | 0.326 g/1540.2 5 mm$^2$ | 2.61 g/cc | 0.163 g/1540.2 5 mm$^2$ | 1.52 g/cc | NCM 523 | Artificial graphite |
| Comp arative Embo diment 1 | 30 | 15 | 0.3 g/1540.2 5 mm$^2$ | 2.4 g/cc | 0.15 g/1540.2 5 mm$^2$ | 1.4 g/cc | NCM 523 | Artificial graphite |
| Comp arative Embo diment 2 | 30 | 15 | 0.3 g/1540.2 5 mm$^2$ | 2.4 g/cc | 0.15 g/1540.2 5 mm$^2$ | 1.4 g/cc | NCM 523 | Artificial graphite |

**Table 3 Electrode assemblies 23 located in the third region 26 in Embodiments 10 to 13 and Comparative Embodiment 2**

| Item | Ca pa cit y (A h) | Thi ckn ess (m m) | Coating mass of positive active material layer | Compacti on density of positive electrode plate | Coating mass of negative active material layer | Compaction density of negative electrode plate | Positive active material | Negative active material |
|---|---|---|---|---|---|---|---|---|
| Embodi ment 11 | 30 | 15 | 0.3 g/1540.25 mm$^2$ | 2.4 g/cc | 0.15 g/1540.25 mm$^2$ | 1.4 g/cc | NCM523 | Artificial graphite |
| Embodi ment 12 | 32 .6 1 | 15 | 0.326 g/1540.25 mm$^2$ | 2.61 g/cc | 0.163 g/1540.25 mm$^2$ | 1.52 g/cc | NCM523 | Artificial graphite |
| Embodi ment 13 | 31 | 15 | 0.31 g/1540.25 mm$^2$ | 2.48 g/cc | 0.155 g/1540.25 mm$^2$ | 1.45 g/cc | NCM523 | Artificial graphite |
| Compa rative Embodi ment 2 | 30 | 15 | 0.3 g/1540.25 mm$^2$ | 2.4 g/cc | 0.15 g/1540.25 mm$^2$ | 1.4 g/cc | NCM523 | Artificial graphite |

Preparation method of the battery cell 20:

S1. Dissolving the positive electrode material in N-methyl-pyrrolidone at a suitable mass ratio, stirring the mixture under a vacuum condition to obtain a positive electrode slurry, applying the slurry evenly on a surface of aluminum foil, and ensuring the same coating mass on both sides of the aluminum foil, and then cold-pressing the electrode plate to obtain a positive electrode plate.

S2. Dissolving the negative electrode materials in specified order at an appropriate mass ratio in deionized water, stirring the mixture well to obtain a negative electrode slurry, applying the slurry evenly on a surface of copper foil, and ensuring the same coating mass on both sides of the foil, and then cold-pressing the electrode plate to obtain a negative electrode plate.

S3. Die-cutting, winding, hot-pressing, and welding the positive and negative electrode plates prepared under the above different conditions, and injecting an electrolyte solution to obtain a hard-shell lithium-ion battery 100.

S4. Chemically forming the lithium-ion battery 100, charging the battery at a constant current of 0.1 C until the voltage reaches 3.0 V, and charging the battery at a constant current of 0.2 C until the voltage reaches 3.75 V.

S5. Carrying out a capacity test on the lithium-ion battery 100 according to the following charging method: Charging the battery at a constant current of 0.33 C until the voltage reaches a rated upper-limit voltage, and then charging the battery at a constant voltage of the current drops to 0.05 C. Discharging the charged lithium-ion battery 100 according to the following discharging method: Discharging the battery at a direct current of 0.33 C until the voltage reaches a rated lower-limit voltage, and recording a discharge capacity of the lithium-ion battery 100.

Test Examples

Taking the battery cells 20 in Embodiments 1 to 13 and Comparative Embodiments 1 to 2 of this application. Measuring the number of cycles and energy density of the battery cells, and calculating the value of $(Cap_1 \times H_2)/(Cap_2 \times H_1)$. The results are shown in Table 4.

The number of cycles is measured by the following method:
Performing 0.5 C/0.5 C cycle test on the battery cell 20 at a temperature of 25 °C until the capacity fades to 80% of the initial capacity, and counting the number of cycles.

Energy density = energy/volume, unit: Wh/L.

Method for testing the energy: Charging the battery at a constant current of 0.33 C until the voltage reaches an upper-limit voltage, and charging the battery at a constant voltage until the current drops to 0.05 C, and then discharging the battery at 0.33 C until the voltage reaches a lower-limit voltage, and measuring the discharge energy (Wh).

The volume is calculated from the external length, width and height of the housing 22 of the battery cell 20.

**Table 4 Number of cycles, energy density, and $(Cap_1 \times H_2)/(Cap_2 \times H_1)$ value of the battery cells 20 in Embodiments 1 to 13 and Comparative Embodiments 1 to 2**

| Item | Number of cycles @80%SOH | Energy density (Wh/L) | $(Cap_1 \times H_2)/(Cap_2 \times H_1)$ |
|---|---|---|---|
| Embodiment 1 | 2500 | 620 | 0.92 |
| Embodiment 2 | 2100 | 630 | 0.8 |
| Embodiment 3 | 2400 | 615 | 0.95 |
| Embodiment 4 | 2100 | 603 | 0.99 |
| Embodiment 5 | 2300 | 615 | 0.98 |
| Embodiment 6 | 2300 | 610 | 0.99 |
| Embodiment 7 | 1800 | 630 | 0.75 |
| Embodiment 8 | 2200 | 610 | 0.95 |
| Embodiment 9 | 2300 | 618 | 0.91 |
| Embodiment 10 | 2400 | 625 | 0.876 |
| Embodiment 11 | 2200 | 618 | 0.92 |
| Embodiment 12 | 2300 | 623 | 0.92 |
| Embodiment 13 | 2400 | 620 | 0.92 |
| Comparative Embodiment 1 | 2000 | 600 | 1 |
| Comparative Embodiment 2 | 1800 | 600 | 1 |

As can be seen from Embodiments 1 to 4, the number of cycles of the battery cell 20 is 2100 to 2500 and the energy density is 603 Wh/L to 630 Wh/L in a case that: the ratio of the coating mass of the positive active material of a single electrode assembly 23 located in the first region 24 to the coating mass of the positive active material of a single electrode assembly 23 located in the second region 25 is (0.8 to 0.99): 1; the thickness of the electrode assembly 23 located in the first region 24 is the same as the thickness of the electrode assembly 23 located in the second region 25; $Cap_1$ is less than $Cap_2$; and $0.8 \leq (Cap_1 \times H_2)/(Cap_2 \times H_1) < 1$.

As can be seen from Embodiment 5 versus Embodiment 1, the number of cycles of the battery cell 20 in Embodiment 5 slightly declines to 2300 and the energy density slightly declines to 615 Wh/L in contrast to Embodiment 1 in a case that: the ratio of the coating mass of the positive active material of a single electrode assembly 23 located in the first region 24 to the coating mass of the positive active material of a single electrode assembly 23 located in the second region 25 is 0.92: 1; the thickness of the electrode assembly 23 located in the first region 24 is less than the thickness of the electrode assembly 23 located in the second region 25; and the value of $(Cap_1 \times H_2)/(Cap_2 \times H_1)$ is 0.98.

As can be seen from Embodiment 6 versus Embodiment 3, the number of cycles of the battery cell 20 in Embodiment 6 slightly declines to 2300 and the energy density slightly declines to 610 Wh/L in contrast to Embodiment 3 in a case that: the ratio of the coating mass of the positive active material of a single electrode assembly 23 located in the first region 24 to the coating mass of the positive active material of a single electrode assembly 23 located in the second region 25 is 0.95: 1; the thickness of the electrode assembly 23 located in the first region 24 is less than the thickness of the electrode assembly 23 located in the second region 25; and the value of $(Cap_1 \times H_2)/(Cap_2 \times H_1)$ is 0.99.

As can be seen from Embodiment 7 versus Embodiment 2, the number of cycles of the battery cell 20 in Embodiment 6 declines to 1800 and the energy density is unchanged 630 Wh/L in contrast to Embodiment 2 in a case that: the ratio of the coating mass of the positive active material of a single electrode assembly 23 located in the first region 24 to the coating mass of the positive active material of a single electrode assembly 23 located in the second region 25 is 0.8: 1; the thickness of the electrode assembly 23 located in the first region 24 is greater than the thickness of the electrode assembly 23 located in the second region 25; and the value of $(Cap_1 \times H_2)/(Cap_2 \times H_1)$ is 0.75.

As can be seen from Embodiments 8 to 9, the number of cycles of the battery cell 20 is 2200 to 2300 and the energy density is 610 Wh/L to 618 Wh/L in a case that: the ratio of the gravimetric capacity of the positive active material of a single electrode assembly 23 located in the first region 24 to the gravimetric capacity of the positive active material of a single electrode assembly 23 located in the second region 25 is 1: (1.05 to 1.1); the thickness of the electrode assembly 23 located in the first region 24 is the same as the thickness of the electrode assembly 23 located in the second region 25; $Cap_1$ is less than $Cap_2$; and $0.91 \leq (Cap_1 \times H_2)/(Cap_2 \times H_1) \leq 0.95$.

As can be seen from Embodiment 10, the number of cycles of the battery cell 20 is 2400 and the energy density is 625 Wh/L in a case that: the ratio of the coating mass of the positive active material of a single electrode assembly 23 located in the first region 24 to the coating mass of the positive active material of a single electrode assembly 23 located in the second region 25 is 0.92: 1; the ratio of the gravimetric capacity of the positive active material of a single electrode assembly 23 located in the first region 24 to the gravimetric capacity of the positive active material of a single electrode assembly 23 located in the second region 25 is 1: (1.05 to 1.1); the thickness of the electrode assembly 23 located in the first region 24 is the same as the thickness of the electrode assembly 23 located in the second region 25; $Cap_1$ is less than $Cap_2$; and the value of $(Cap_1 \times H_2)/(Cap_2 \times H_1)$ is 0.876.

As can be seen from Embodiments 11 to 13, the number of cycles of the battery cell 20 is 2200 to 2400 and the energy density is 618 Wh/L to 623 Wh/L in a case that: the ratio of the coating mass of the positive active material of a single electrode assembly 23 located in the first region 24 to the coating mass of the positive active material of a single electrode assembly 23 located in the second region 25 is 0.92: 1; the coating mass of the positive active material of a single electrode assembly 23 located in the third region 26 is identical to the coating mass of the positive active material of a single electrode assembly 23 located in the second region 25, or the coating mass of the positive active material of a single electrode assembly 23 located in the third region 26 is identical to the coating mass of the positive active material of a single electrode assembly 23 located in the first region 24, or the coating mass of the positive active material of a single electrode assembly 23 located in the third region 26 is greater than the coating mass of the positive active material of a single electrode assembly 23 located in the first region 24; the thickness of the electrode assembly 23 located in the first region 24, the thickness of the electrode assembly 23 located in the second region 25, and the thickness of the electrode assembly 23 located in the third region 26 are identical; $Cap_1$ is less than $Cap_2$; and the value of $(Cap_1 \times H_2)/(Cap_2 \times H_1)$ is 0.92.

As can be seen from Comparative Embodiment 1 versus Embodiment 1, when the capacity $Cap_1$ of a single electrode assembly 23 located in the first region 24 is identical to the capacity $Cap_2$ of a single electrode assembly 23 located in the second region 25, the number of cycles in Comparative Embodiment 1 is as low as 2400, and the energy density is 600 Wh/L, indicating that the service life of the battery cell 20 in Comparative Embodiment 1 is shorter than that of the battery cell 20 in Embodiment 1.

As can be seen from Comparative Embodiment 2 versus Embodiment 11, when the capacity $Cap_1$ of a single electrode assembly 23 located in the first region 24 is identical to the capacity $Cap_2$ of a single electrode assembly 23 located in the second region 25, the number of cycles in Comparative Embodiment 1 is as low as 1800, and the energy density is 600 Wh/L, indicating that the service life of the battery cell 20 in Comparative Embodiment 2 is shorter than that of the battery cell 20 in Embodiment 11.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising:

   a housing, wherein a cavity is defined in the housing, the cavity comprises a first region and a second region, and the first region is closer to the housing than the second region; and
   at least 3 electrode assemblies, wherein the at least 3 electrode assemblies are disposed in the cavity, a capacity of a single electrode assembly located in the first region is $Cap_1$, a capacity of a single electrode assembly located in the second region is $Cap_2$, and $Cap_2$ is greater than $Cap_1$.

2. The battery cell according to claim 1, wherein the at least 3 electrode assemblies are stacked and arranged in the cavity, and, along a stacking direction, the capacity of the electrode assembly located at either end is $Cap_1$, and the capacity of the electrode assembly located in the middle is $Cap_2$.

3. The battery cell according to claim 2, wherein a thickness of the single electrode assembly located in the first region along the stacking direction is $H_1$, a thickness of the single electrode assembly located in the second region along the stacking direction is $H_2$, and $Cap_1$, $Cap_2$, $H_1$, and $H_2$ satisfy the following relationship:

$$(Cap_1 \times H_2)/(Cap_2 \times H_1) < 1.$$

4. The battery cell according to any one of claims 1 to 3, wherein the cavity further comprises a third region, the third region is closer to the housing than the second region, the first region is closer to the housing than the third region, and the capacity of the single electrode assembly located in the third region is $Cap_3$, satisfying: $Cap_2 \geq Cap_3 \geq Cap_1$.

5. The battery cell according to any one of claims 1 to 4, satisfying at least one of the following conditions a or b:

   a. a coating mass of a positive active material of the single electrode assembly located in the first region is less than a coating mass of a positive active material of the single electrode assembly located in the second region; or
   b. a gravimetric capacity of a positive active material of the single electrode assembly located in the first region is less than a gravimetric capacity of a positive active material of the single electrode assembly located in the second region.

6. The battery cell according to claim 5, wherein a ratio of the coating mass of the positive active material of the single electrode assembly located in the first region to the coating mass of the positive active material of the single electrode assembly located in the second region is (0.8 to 0.99): 1.

7. The battery cell according to claim 5, wherein a ratio of the coating mass of the positive active material of the single electrode assembly located in the first region to the coating mass of the positive active material of the single electrode assembly located in the second region is (0.92 to 0.95): 1.

8. The battery cell according to claim 5, wherein a ratio of the gravimetric capacity of the positive active material of the single electrode assembly located in the first region to the gravimetric capacity of the positive active material of the single electrode assembly located in the second region is 1: (1.05 to 1.1).

9. A battery, comprising the battery cell according to any one of claims 1 to 8.

10. An electrical device, comprising the battery according to claim 9, wherein the battery is configured to provide electrical energy.

FIG. 2

FIG. 3

20

FIG. 4

FIG. 5

FIG. 6

20

25

24

H₁  H₂

23

FIG. 7

20

24

25

23

H₁  H₂

FIG. 8

## INTERNATIONAL SEARCH REPORT

| | |
|---|---|
| International application No. | |
| | **PCT/CN2022/127387** |

### A. CLASSIFICATION OF SUBJECT MATTER

H01M10/42(2006.01)i; H01M10/058(2010.01)i; H01M10/0525(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 电池, 电极组件, 壳体, 第一, 第二, 容量, 温度, battery, electrode assembly, case, first, second, capacity, temperature

### C. DOCUMENTS CONSIDERED TO BE RELEVANT

| Category* | Citation of document, with indication, where appropriate, of the relevant passages | Relevant to claim No. |
|---|---|---|
| X | US 2016329597 A1 (SAMSUNG SDI CO., LTD.) 10 November 2016 (2016-11-10) description, paragraphs 5 and 32-139, and figures 1-6 | 1-5, 9-10 |
| Y | US 2016329597 A1 (SAMSUNG SDI CO., LTD.) 10 November 2016 (2016-11-10) description, paragraphs 5 and 32-139, and figures 1-6 | 6-8 |
| Y | CN 217485594 U (NINGDE CONTEMPORARY AMPEREX TECHNOLOGY CO., LTD.) 23 September 2022 (2022-09-23) description, paragraphs 54-153, and figures 1-9 | 6-8 |
| X | JP 2013077529 A (GS YUASA CORP.) 25 April 2013 (2013-04-25) description, paragraphs 9-62 and 134-201, and figures 1-8 | 1-5, 9-10 |
| Y | JP 2013077529 A (GS YUASA CORP.) 25 April 2013 (2013-04-25) description, paragraphs 9-62 and 134-201, and figures 1-8 | 6-8 |
| X | JP 2013077527 A (GS YUASA CORP.) 25 April 2013 (2013-04-25) description, paragraphs 14-143, and figures 1-6 | 1-5, 9-10 |
| Y | JP 2013077527 A (GS YUASA CORP.) 25 April 2013 (2013-04-25) description, paragraphs 14-143, and figures 1-6 | 6-8 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 July 2023** | **12 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/127387** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 111916844 A (POWERAMP TECHNOLOGY LIMITED) 10 November 2020 (2020-11-10)<br>        entire document | 1-10 |

Form PCT/ISA/210 (second sheet) (July 2022)

## INTERNATIONAL SEARCH REPORT
### Information on patent family members

| International application No. |
|---|
| **PCT/CN2022/127387** |

| Patent document cited in search report | | | Publication date (day/month/year) | Patent family member(s) | | | Publication date (day/month/year) |
|---|---|---|---|---|---|---|---|
| US | 2016329597 | A1 | 10 November 2016 | US | 10587001 | B2 | 10 March 2020 |
| | | | | KR | 20160131806 | A | 16 November 2016 |
| | | | | KR | 102307909 | B1 | 01 October 2021 |
| CN | 217485594 | U | 23 September 2022 | | None | | |
| JP | 2013077529 | A | 25 April 2013 | JP | 6066255 | B2 | 25 January 2017 |
| JP | 2013077527 | A | 25 April 2013 | JP | 5967464 | B2 | 10 August 2016 |
| CN | 111916844 | A | 10 November 2020 | CN | 111916844 | B | 15 April 2022 |
| | | | | US | 2022052386 | A1 | 17 February 2022 |

Form PCT/ISA/210 (patent family annex) (July 2022)